# EUROPÄISCHE PATENTANMELDUNG

(11) **EP 2 898 770 A2**
(43) Veröffentlichungstag der Anmeldung: **29.07.2015**
(21) Anmeldenummer: 14198112.6
(22) Anmeldetag: 16.12.2014
(51) Int. Cl.: A01K 13/00

(54) **Halter für Mähnenzöpfe**

(30) Priorität: 20.12.2013 DE 102013114602; 30.10.2014 DE 102014115832
(71) Anmelder: Zimmer, Astrid, 66265 Heusweiler (DE)
(72) Erfinder: Zimmer, Astrid, 66265 Heusweiler (DE)
(74) Vertreter: Patentanwälte Bernhardt / Wolff Partnerschaft

(57) **Zusammenfassung**

Die Erfindung betrifft einen Halter für Möhnenzöpfe (1), die in einer Reihe vom Hals (2) eines Pferdes abstehen und jeweils durch Zusammenlegen eines aus Mähnenhaar geflochtenen Zopfstrangs (3) gebildet sind, mit einem den Zopfstrang (3) im zusammengelegten Zustand haltenden Element (5). Erfindungsgemäß umfasst das Halteelement (5) eine auf den Mähnenzopf (1) aufstülpbare Haube (6) oder aufziehbare Manschette.

## Beschreibung

Die Erfindung betrifft einen Halter für Mähnenzöpfe, die in einer Reihe vom Hals eines Pferdes abstehen und jeweils durch Zusammenlegen eines aus Mähnenhaar geflochtenen Strangs gebildet sind, wobei der Halter ein den Strang im zusammengelegten Zustand haltendes Element umfasst.

Bei Pferdesportveranstaltungen, wie Reit- und Springturnieren, Pferderennen und dergleichen, ist es Tradition und teilweise vorgeschrieben, die Pferde in dekorativer Weise herzurichten. Hierzu gehört insbesondere die sog. Einzopfung, bei der aus dem Mähnenhaar vom Hals des Pferdes abstehende, aus einem geflochtenen Strang bestehende Zöpfe gebildet werden. Als Halteelement zur Stabilisierung derartiger Zöpfe werden herkömmlich den Zopf umschlingende Bänder eingesetzt, insbesondere elastische Ringbänder aus Gummi. Nachteilig neigen diese Bänder zum Verrutschen in Richtung zum Hals des Pferdes, bis sie schließlich nur noch den Umfang des geflochtenen Zopfstrangs umschlingen und sich der Zopf auflöst.

Der Erfindung liegt die Aufgabe zugrunde, einen neuen Halter für Mähnenzöpfe zu schaffen, der gegenüber dem Stand der Technik eine erhöhte Haltesicherheit bietet.

Der diese Aufgabe lösende Halter nach der Erfindung ist dadurch gekennzeichnet, dass das Halteelement eine auf den Mähnenzopf aufstülpbare Haube oder aufziehbare Manschette umfasst.

Vorteilhaft liegt die aufstülpbare Haube oder aufziehbare Manschette mit einer größeren Fläche als das herkömmlich verwendete Band gegen den durch Zusammenlegen des Zopfstrangs gebildeten Zopf an, sodass die Gefahr, dass das Halteelement verrutscht, deutlich gemindert ist.

In einer bevorzugten Ausführungsform der Erfindung ist die Haube oder die Manschette an ihrem dem Hals des Pferdes zugewandten Rand einschnürbar oder mit einem vorzugsweise elastischen Band zur Umschlingung des Mähnenzopfes verbunden. Vorteilhaft lässt sich durch die Einschnürung oder das Band ein formschlüssiger Einschluss des Zopfes durch das Halteelement herstellen, in dem die Einschnürung oder das Band an der dem Hals des Pferdes zugewandten Ende des Zopfes, wo für den Durchmesser des Zopfes nur noch der Durchmesser des Zopfstrangs maßgebend ist, angreift.

Das Band ist insbesondere derart mit dem genannten Rand verbunden, dass es sich über die aufgestülpte Haube oder die aufgezogene Manschette hinweg auf den Mähnenzopf aufziehen lässt. Vorteilhaft kann so die Haube oder die Manschette relativ weit und daher bequem aufziehbar sein, während das abschließend aufzuziehende Schlingband trotzt hoher Schlingkraft leicht handhabbar ist.

Eine Manschette kann auch an deren dem Hals des Pferdes abgewandten Rand einschnürbar sein, was ein Verrutschen der Manschette nach unten verhindert.

In weiterer Ausgestaltung der Erfindung besteht die Haube oder die Manschette aus einem durchsichtigen oder zumindest weitgehend durchsichtigen Material. Das geflochtene Mähnenhaar des Zopfes bleibt somit sichtbar. Das Material der Haube oder der Manschette kann insbesondere eine Netz- oder Lochstruktur aufweisen.

In einer weiteren Ausführungsform der Erfindung ist das Material der Haube oder der Manschette elastisch und insbesondere die Manschette weist auf der Innenseite eine rutschfeste Oberfläche auf.

Insbesondere eine Haube oder Manschette mit einer Netz- oder Lochstruktur ist zweckmäßig dem Pferdehaar angepasst, wobei die Haube oder Manschette weitgehend unsichtbar bleibt.

Es versteht sich, dass das Halteelement mit Schmuckelementen verbunden sein kann, z.B. funkelnden Strasssteinen. Beliebige, ggf. zum Anlass von Veranstaltungen passende Farbgestaltungen sind möglich.

Die Manschette kann alternativ laschenartig mit einer sich in axialer Richtung erstreckenden Verbindungseinrichtung, insbesondere einem Klettverschluss, ausgebildet sein, sodass sie unter Umschlingung des Zopfes um diesen herum an den Zopf anlegbar ist.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein Turnierpferd, aus dessen Mähnenhaare Mähnenzöpfe gebildet sind,
- Fig. 2: einen durch ein elastisches Band auf herkömmliche Weise zusammengehaltenen Mähnenzopf,
- Fig. 3: ein erstes Ausführungsbeispiel für einen erfindungsgemäßen Halter,
- Fig. 4: den Halter von Fig. 3 in Verbindung mit einem Mähnenzopf, und
- Fig. 5 bis 7: weitere Ausführungsbeispiele für erfindungsgemäße Mähnenzopfhalter.

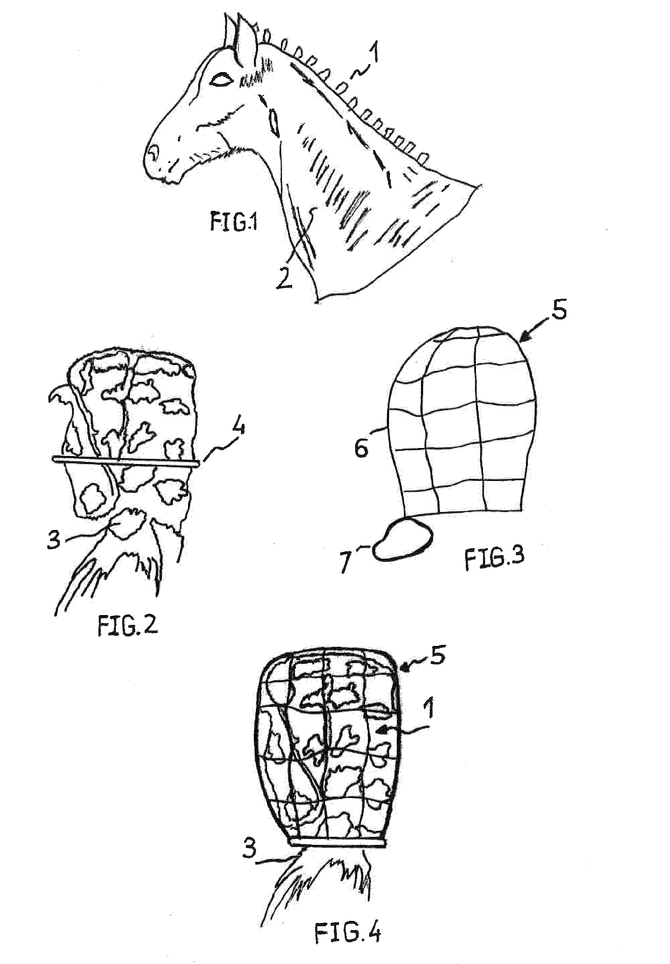

Bei einem in Fig. 1 gezeigten, für ein Turnier hergerichteten Pferd sind aus den Mähnenhaaren Zöpfe 1 gebildet, die rückseitig vom Hals des Pferdes abstehen und eine in dem gezeigten Beispiel aus vierzehn solchen Zöpfen bestehende Reihe bilden.

Wie Fig. 2 erkennen lässt, bestehen die Zöpfe 2 jeweils aus einem mäanderartig zusammengelegten, jeweils aus einem Teil der Mähnenhaare geflochtenen Zopfstrang 3.

Um die Zöpfe 2 zu stabilisieren und den Zopfstrang 3 im zusammengelegten Zustand zu halten, wird auf den Mähnenzopf 2 herkömmlich ein elastisches Schlingband 4, insbesondere ein Gummiband, als Halteelement aufgezogen.

Ein in Fig. 3 gezeigtes Halteelement 5 umfasst eine Haube 6, die in dem gezeigten Beispiel aus einem Material mit einer Netzstruktur besteht, dessen Farbe an die des Mähnenhaares des Pferdes angepasst ist. Die Haube 6 ist an ihrem Öffnungsrand mit einem elastischen Schlingband 7 verbunden, wobei diese Verbindung nur über einen kleinen Teil des Umfangs des in dem gezeigten Beispiel geschlossenen, aus Gummi hergestellten Schlingbandes besteht.

Bei Benutzung des Halteelements 5 als Halter für einen Zopf 1 wird in einem ersten Schritt die Haube 6 über den Zopf gestülpt und in einem zweiten Schritt dann das Schlingband 7 auf den Zopf 1 mit der aufgestülpten Haube 6 aufgezogen. An dem dem Hals 2 des Pferdes zugewandten Ende des Zopfes 1 kann sich das Schlingband 7 so weit zusammenziehen, dass es nicht mehr den gesamten Zopf 1 sondern nur noch den Zopfstrang 3 umschlingt. Dadurch ist das Halteelement 5 formschlüssig auf dem Zopf 1 gehalten. Die mit dem Schlingband 7 verbundene Haube 6 kann nicht vom Zopf 1 abrutschen.

Durch die Netzstruktur der Haube 6 und deren farbliche Anpassung an die Mähne des Pferdes ist der durch die Haube 6 zusammengehaltene Zopf 1 als solcher gut sichtbar. Das am unteren Ende des Zopfes 1 angeordnete Schlingband 7 kann sich farblich absetzen und für eine dekorative Wirkung sorgen.

Im Folgenden sind gleiche oder gleichwirkende Teile mit derselben Bezugszahl wie in den vorangehenden Figuren bezeichnet, wobei der betreffenden Bezugszahl der Buchstabe a, b bzw. c beigefügt ist.

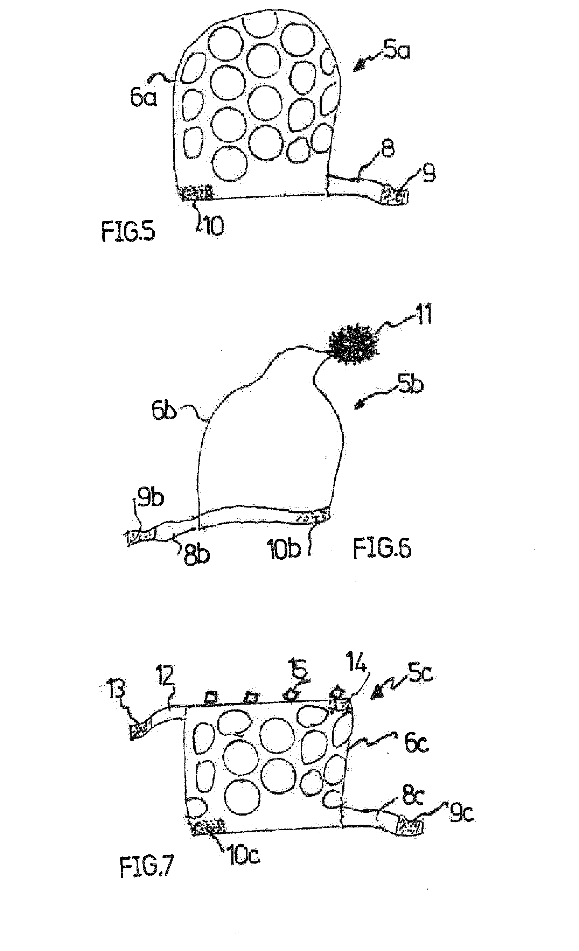

Fig. 5 zeigt ein Halteelement 5a mit einer Haube 6a, deren Material eine Lochstruktur aufweist. Am Öffnungsrand der Haube 6a ist eine elastische Lasche 8 mit einer Klettverschlussfläche 9 am freien Ende angebracht. Nach Überstülpen der Haube 6a auf einen Zopf wird in einem zweiten Schritt die Haube 6a am Öffnungsrand durch Verbinden der Klettverschlussfläche 9 mit einer Klettverschlussfläche 10 eingeschnürt, sodass die Haube 6a den aufgeweiteten, durch Zusammenlegen des Zopfstrangs gebildeten Teil des Zopfes hintergreift. Die Haube 6a ist dann formschlüssig an dem Mähnenzopf fixiert.

Fig. 6 zeigt ein Ausführungsbeispiel eines Halteelements 5b mit einer Haube 6b, die in der Art einer Zipfelmütze mit einer Bommel 11 ausgebildet ist. Es versteht sich, dass insbesondere die Bommel 11 ein z.B. glitzerndes Schmuckelement bilden kann.

Das Ausführungsbeispiel von Fig. 7 betrifft ein Halteelement 5c mit einer schlauchartigen Manschette 6c, die wiederum aus einem Material mit einer Lochstruktur gefertigt ist. Neben einer Lasche 8c am unteren Öffnungsrand ist auch am oberen Öffnungsrand eine Lasche 12 mit einer Klettverschlussfläche 13 gebildet. Nach Aufziehen des Halteelements 5b auf einen Zopf werden zur Stabilisierung gegen Verrutschen nicht nur die Klettverschlussflächen 9,10, sondern auch die Klettverschlussflächen 13,14 miteinander unter Einschnürung der schlauchartigen Manschette 6c verbunden.

Am oberen Öffnungsrand sind in dem gezeigten Beispiel Strasssteine 15 als Schmuckelemente angebracht.

Als Schmuckelemente geeignet für die vorangehend anhand der Figuren 3 bis 7 beschriebenen Halter sind insbesondere Strasssteine mit einer durch Erhitzen aktivierbaren Klebefläche, die mit dem Halteelement durch Aufbügeln verbindbar sind.

Ein Halteelement mit den obengenannten Merkmalen ließe sich auch zur Halterung eines Haarknotens (Dutt) einer Haarknotenfrisur verwenden. Insbesondere könnte eine Reiterin einen zur Ausstaffierung des Pferdes passenden solchen Haarknotenhalter tragen.

## Patentansprüche

1. Halter für Mähnenzöpfe (1), die in einer Reihe vom Hals (2) eines Pferdes abstehen und jeweils durch Zusammenlegen eines aus Mähnenhaar geflochtenen Zopfstrangs (3) gebildet sind, mit einem den Zopfstrang (3) im zusammengelegten Zustand haltenden Element (5),
**dadurch gekennzeichnet,**
**dass** das Halteelement (5) eine auf den Mähnenzopf (1) aufstülpbare Haube (6,6a,6b) oder aufziehbare Manschette (6c) umfasst.

2. Halter nach Anspruch 1,
**dadurch gekennzeichnet,**
**dass** die Haube (6,6a,6b) oder Manschette (6c) an ihrem dem Hals (2) des Pferdes zugewandten Rand einschnürbar oder mit einem Band (7) zur Umschlingung des Mähnenkopfs (1) verbunden ist.

3. Halter nach Anspruch 2,
**dadurch gekennzeichnet,**
**dass** das Band (7) an dem Rand derart mit der Haube (6,6a,6b) oder Manschette (6c) verbunden ist, dass es sich über die aufgestülpte Haube (6,6a,6b) oder die Manschette (6c) hinweg auf den Mähnenzopf (1) aufziehen lässt.

4. Halter nach einem der Ansprüche 1 bis 3,
**dadurch gekennzeichnet,**
**dass** die Manschette (6c) an den dem Hals (2) des Pferdes abgewandten Rand einschnürbar ist.

5. Halter nach einem der Ansprüche 1 bis 4,
**dadurch gekennzeichnet,**
**dass** die Haube (6,6a,6b) oder die Manschette (6c) aus einem durchsichtigen oder zumindest weitgehend durchsichtigen Material hergestellt ist.

6. Halter nach Anspruch 5,
**dadurch gekennzeichnet,**
**dass** das Material der Haube (6,6a,6b) oder der Manschette (6c) eine Netzoder Lochstruktur aufweist.

7. Halter nach einem der Ansprüche 1 bis 6,
**dadurch gekennzeichnet,**
**dass** das Material der Haube (6,6a,6b) oder der Manschette (6c) elastisch ist.

8. Halter nach einem der Ansprüche 1 bis 7,
**dadurch gekennzeichnet,**
**dass** die Haube (6,6a,6b) oder die Manschette (6c) in der Farbe dem Mähnenhaar des Pferdes angepasst ist.

9. Halter nach einem der Ansprüche 1 bis 8,
**dadurch gekennzeichnet,**
**dass** das Halteelement (5) mit wenigstens einem Schmuckelement (11,15) verbunden ist.

10. Halter nach Anspruch 9,
**dadurch gekennzeichnet,**
**dass** das Schmuckelement ein Strassstein (15) ist.

11. Verwendung eines Halters nach einem der Ansprüche 1 bis 9 zum Zusammenhalten eines Haarknotens (Dutt).
